# EUROPÄISCHE PATENTANMELDUNG

(11) **EP 4 697 565 A1**
(43) Veröffentlichungstag der Anmeldung: **18.02.2026**
(21) Anmeldenummer: 24194489.1
(22) Anmeldetag: 14.08.2024
(51) Int. Cl.: H02K 1/276, H02K 15/03, H02K 15/12

(54) **FIXIERUNG VON PERMANENTMAGNETEN EINES ROTORS EINER PERMANENTERREGTEN DYNAMOELEKTRISCHEN MASCHINE MITTELS EINES TRÄUFELPROZESSES**

(71) Anmelder: Innomotics GmbH, 90441 Nürnberg (DE)
(72) Erfinder: Büttner, Klaus, 97618 Hollstadt (DE); Katzenberger, Tobias, 97631 Bad Königshofen STT Untereßfeld (DE); Kirchner, Florian, 97705 Burkardroth (DE); Kirchner, Klaus, 97645 Ostheim (DE); Schirm, Dieter, 96149 Breitengüßbach (DE); Warmuth, Matthias, 97618 Windshausen (DE)
(74) Vertreter: Michalski Hüttermann & Partner Patentanwälte mbB

(57) **Zusammenfassung**

Die Erfindung betrifft ein Verfahren zur Fixierung von Permanentmagneten (9) in Rotoren (4) permanenterregter Synchronmaschinen mittels eines Träufelprozesses durch folgende Schritte:
- Paketieren (30), insbesondere Stanzpaketieren eines Blechpaketes (6) des Rotors (4),
- Drehfestes Verbinden des Blechpaketes (6) mit einer Welle (8),
- Axiales Einsetzen von Permanentmagneten (15) in im Wesentlichen axial verlaufenden Ausnehmungen (11) des Blechpakets (6),
- das mit Permanentmagneten (15) bestückte Blechpaket (6) wird unter Rotation um seine Achse (7) zumindest am Außendurchmesser mittels zumindest einer axial bewegbaren Düse mit Harz bzw. Härter beaufschlagt, so dass sich das Harz bzw. Kleber (47) gleichmäßig zumindest über die Außenoberfläche in Klebespalte (18,20) zwischen Permanentmagnet (15) und Innenseite der Tasche (12) verteilt, als auch zwischen die Bleche (5) im radial äußeren Bereich des Blechpakets (6).

## Beschreibung

Die Erfindung betrifft ein Verfahren zur Fixierung von Permanentmagneten eines Rotors einer permanenterregten dynamoelektrischen Maschine mittels eines Träufelprozesses, einen damit hergestellten Rotor, eine permanenterregte dynamoelektrische Maschine mit einem derartigen Rotor, als auch eine Verwendung einer permanenterregten dynamoelektrischen Maschine.

Industrielle Niederspannungsmotoren (<1kV Nennspannung) vor allem in den Wirkungsgradklassen IE4 und höher, werden üblicherweise mit Permanentmagnet bestückten Rotoren gefertigt. Dabei werden die Permanentmagnete in die hierfür vorgesehen Taschen des Blechpakets des Rotors eingebracht (sogenannte vergrabene Permanentmagnete). Dazu werden Permanentmagneten in Magnettaschen eingefügt und mit Kleber ausgegossen bzw. verklebt. Die geometrischen Abmessungen dieser Taschen weisen hierbei gegenüber den Permanentmagneten ein Übermaß auf, um das axiale Einbringen der Permanentmagnete in die Taschen zu ermöglichen.

Diese Taschen sind in den Abmessungen im Bereich der Taschen 0,1-0,2 mm größer gestaltet, damit der Permanentmagnet leichter eingeschoben werden kann. An den umfänglichen Seiten der Magnettasche sind üblicherweise Flusssperren vorgesehen, die den magnetischen Fluss im Rotorblech positiv beeinflussen.

Nach dem Einbringen der Permanentmagnete in die Taschen müssen diese Permanentmagnete mechanisch mit dem Blechpaket des Rotors fixiert werden. Damit soll ein Spiel der Permanentmagnete in den Taschen vermieden werden, das bei mechanischen Einwirkungen wie Vibrationen, Fliehkräften während des Betriebs der permanenterregten dynamoelektrischen Maschine oder aufgrund von Magnetkräften u.a. eine Positionsänderung der Permanentmagnete verursacht.

Üblicherweise werden die Permanentmagnete hierfür mittels eines reaktiven Kunststoffklebers in die Taschen geklebt. Hierfür gibt es mehrere üblicherweise angewandte Vorgehensweisen.

Die Magnettasche wird vorab mit Kleber befüllt. Im Anschluss wird der Permanentmagnet in die Tasche eingeschoben. Der Permanentmagnet verdrängt den Kleber in den Klebespalt und die Freiräume.

Bei einer anderen Herstellung wird der Permanentmagnet vorab in die Magnettasche eingeschoben. Danach wird Kleber auf die obere Stirnseite aufgebracht, der nach einer bestimmten Zeit in den Klebespalt einsickert.

Nachteile dieser Methoden sind, dass der Kleber auch ungewollt zwischen die Bleche kapilliert und sozusagen Kleber aus dem Klebespalt saugt, so dass die Verklebung Permanentmagnet und Magnettasche unzureichend ist.

Der Klebstoff läuft undefiniert in Freiräume der Bleche oder tritt am Außendurchmesser aus und verunreinigt die Oberfläche des Rotors, was ein zusätzliches Abdichten erforderlich macht. Dies führt auch zu erhöhter Unwucht des Rotors.

Dabei liegen die einzelnen Bleche jedoch nicht dicht aneinander, sondern haben jeweils einen nicht konstanten Mikrospalt, der eine hohe Kapillarwirkung aufweist. Dies wirkt sich extrem nachteilig für den Klebeprozess aus, da der Kleber während des Klebevorgangs aus dem Klebespalt in die Zwischenräume der Bleche kapilliert und die Verklebung aufgrund von Mangel an Kleber im Klebespalt zwischen Magnet und Blech negativ beeinflusst wird.

Um der Problematik des "Absaugens" von Kleber aus dem Klebespalt durch Kapillare zwischen den Blechen zu vermeiden, werden laut Kleberhersteller verschiedene Methoden, wie Vollverguss unter Vakuum, oder eine "Vorab-Beaufschlagung" der Tascheninnenwände mit einem Aktivator befürwortet, um die Reaktionsgeschwindigkeit zu erhöhen und das Kapillieren des Klebers in die Zwischenräume der Bleche zu reduzieren.

Diese Verfahren sind sehr jedoch kostenintensiv und bei vergleichsweise hohen Prozesszeiten auch technisch sehr aufwändig.

Eine Möglichkeit ist das vorherige Einbringen eines pastösen Klebstoffes in die Tasche, welcher dann durch den später eingeschobenen Permanentmagneten derart verdrängt wird, dass dieser sich um den Permanentmagneten schmiegt. Dieses Einsetzen der Permanentmagnete in das pastöse Material führt allerdings zu einer gewissen Positionsungenauigkeit, da sich die verdrängte Paste nicht gleichmäßig um den Permanentmagneten schmiegt und sich somit nur punktuelle Verklebungen einstellen. Das Handling der aufmagnetisierten Permanentmagnete ist dabei nicht trivial und kann aufgrund der Magnetkräfte nicht ordentlich, in der wünschenswerten Weise, durchgeführt werden. Außerdem muss nach jedem Magneteinschub das Werkzeug einer Hilfsvorrichtung von der voreingebrachten Klebepaste gereinigt werden.

Eine weitere Möglichkeit die Permanentmagnete in der Tasche zu fixieren ist das spätere Vergießen der mit den Permanentmagneten bestückten Taschen mittels eines reaktiven Harzes, welches im Anschluss durch thermische Einwirkung (mittels eines Ofens, z.B. durch Temperatureinwirkung von 140°C für 2 Stunden) gehärtet werden muss. Dabei ist das Aufheizen und Abkühlen des gesamten Rotors ein zeit- und kostspieliger Prozessschritt.

Des Weiteren können jedoch derartige Temperaturen während der Einwirkzeit zu einer Teilentmagnetisierung der Permanentmagnete führen, was die Leistungsfähigkeit der permanenterregten dynamoelektrischen Maschine nachhaltig beeinträchtigt.

Des Weiteren ist es dabei notwendig das Bauteil im Vorfeld adäquat abzudichten, um zu verhindern, dass das flüssige Reaktivharz aus den dafür vorgesehen Bereichen austreten kann. Dies ist zum einen an den Stirnseiten des Rotorblechpaketes notwendig, aber auch auf der außenliegenden Mantelfläche des Rotors, da es in Bereichen dünner Wandungen (<1mm) die für den optimalen magnetischen Fluss notwendig sind, zum Durchdringen der Einzelbleche kommt und somit zu Verunreinigung und Tropfnasenbildung auf der äußeren Mantelfläche.

Um zu verhindern, dass in einem nachgelagerten Prozessschritt diese Flächen aufwändig gereinigt und nachbearbeitet werden müssen, wird im Vorfeld die Mantelfläche des Rotors durch einen Lackiervorgang versiegelt. Hierbei wird ebenfalls ein hochtemperaturhärtender Lack verwendet, was zu einem zusätzlichen Prozessschritt und einem weiteren Aufheiz- und Abkühlzyklus führt.

Bei einem Vollverguss des Rotorpakets mittels Kleber werden an den Stirnseiten des Rotors Pressscheiben angesetzt. Diese sind aus Aluminium und werden mit einer Presspassung auf die Welle unter axialer Verspannung des Rotorpakets aufgeschrumpft. Durch das Aufsetzen der aufgeheizten Pressscheiben unter axialer Verspannung wird das Rotorpakt axial verfestigt. Die Kraftübertragung zum Verspannen wird somit auf der Welle abgestützt. Dazu ist ein ausgeklügeltes Passungssystem u.a. von Pressscheibe zur Welle erforderlich.

Ausgehend davon liegt der Erfindung die Aufgabe zugrunde ein Verfahren zur Fixierung von Permanentmagneten eines Rotors einer permanenterregten dynamoelektrischen Maschine bereitzustellen, dessen Herstellung vergleichsweise einfach ist, und die weniger aufwändige Prozessschritte zur Fixierung von Permanentmagneten im Rotor erfordert. Der damit hergestellte Rotor soll bei einer permanenterregten dynamoelektrischen Maschine die erforderliche Wirkungsgradklasse einhalten und damit für die Verwendungsfälle der permanenterregten dynamoelektrischen Maschine vergleichsweise günstige Verbrauchsdaten liefern.

Die Lösung der gestellten Aufgabe gelingt durch die Merkmalskombination der unabhängigen Ansprüche.

Vorteilhafte Ausgestaltungen der Erfindung sind den davon abhängigen Ansprüchen zu entnehmen.

Erfindungsgemäß wird nun ein Verfahren zur Fixierung von Permanentmagneten in Rotoren permanenterregter Synchronmaschinen mittels eines Träufelprozesses eingesetzt bei dem zunächst Paketieren von gestanzten Einzelblechen des Rotors erfolgt. Vorteilhafterweise wird ein Stanzpaketieren des Blechpaketes des Rotors vorgenommen. Es erfolgt ein drehfestes Verbinden dieses Blechpaketes mit einer Welle, derart, dass sich im Wesentlichen axial verlaufenden Ausnehmungen des Blechpakets ausbilden in die ein axiales Einsetzen von Permanentmagneten ermöglicht. Das mit Permanentmagneten bestückte Blechpaket des Rotors wird nun unter Rotation um seine Achse zumindest am Außenumfang mittels zumindest einer axial bewegbaren Träufeldüse mit Harz bzw. Härter beaufschlagt, so dass sich das Harz bzw. Kleber gleichmäßig zumindest über die Außenoberfläche in Klebespalte zwischen die Bleche im radial äußeren Bereich des Blechpakets als auch zwischen Permanentmagnet und Innenseite der Tasche verteilt,

Das Verfahren zur Fixierung von Permanentmagneten in Rotoren permanenterregter Synchronmaschinen eignet sich auch für Rotoren, die axial durch Teilblechpakete aufgebaut sind.

Erfindungsgemäß wird nunmehr der für herkömmliche Verfahren negative Effekt der Kapillarwirkung zwischen den Blechen für die Fixierung der Permanentmagnete in den Aussparungen bzw. Taschen genutzt, da nunmehr der Kleber von dem Außendurchmesser des Pakets zumindest bis zur Oberfläche des Permanentmagneten fließt und dort eine Verklebung zwischen Taschenaußenwand und Permanentmagnet bewirkt.

Somit sind für diesen Prozess stanzpaketierte Rotorblechpakete sehr gut geeignet, da die generell vorhandenen Mikrospalte zwischen den Blechen (im µm-Bereich) gut für den radial nach innen gerichteten Kapillareffekt bzw. Verlauf des Klebers geeignet sind.

Eine Kapillarwirkung zwischen den Blechen wird auch bei aufgestapelten Paketen mit Einzelblechen, sowie durch einzelne Klebepunkte verklebte Blechpakete möglich sein.

Der Permanentmagnet wird mit der Tascheninnenwandung - vorzugsweise der radial außen liegenden Tascheninnenwandung - verklebt.

Erfindungsgemäß wird vorgeschlagen, ein gesamtes Rotorblechpaket mit den eingefügten Permanentmagneten, das bereits auf die Welle gefügt ist, durch ein Träufelverfahren am Außendurchmesser mit einem 1K oder 2K Harz Härter System zu beaufschlagen.

Üblicherweise entspricht die axiale Länge der Blechpakete oder der Teilblechpakete des Rotors einem ganzzahligen Vielfachen der Länge der Permanentmagnete in einer axial verlaufenden Ausnehmung.

Ausnehmung im Blechpaket oder Teilblechpaket des Rotors sind dabei Ausstanzungen der Bleche, die paketiert zu einem Blechpaket oder Teilblechpaket, axial hintereinander angeordnet sind, um Permanentmagnete axial einschieben zu können. Die Ausnehmungen weisen sowohl Taschen als auch die Flusssperren auf. Die Taschen sind zur, insbesondere axialen Aufnahme der oder des Permanentmagneten vorgesehen.

In den Raum der Ausnehmungen ragen optional Halteelemente, wie Haltenasen zur ergänzenden Fixierung und Halterung der Permanentmagnete zumindest während der Fertigung und/oder im Betrieb der dynamoelektrischen Maschine u.a. gegenüber Fliehkraftbeanspruchungen.

Durch die Gestaltung der Ausnehmung, indem u.a. die Tasche von seitlich angeordneten Flusssperren durch Halteelemente, oder Haltenasen begrenzt ist, die vorzugsweise die radial äußere Tascheninnenwandung umfänglich begrenzen, wird erreicht, dass generell der Permanentmagnet an der radial außenliegenden Taschenwand anliegt. Dies bietet den Vorteil, dass eine gleichmäßige Verklebung des Permanentmagneten an der Tascheninnenwandung gewährleistet ist.

Über die axiale Stapelkraft (Verspannkraft) kann der Stapelfaktor und somit der Spalt zwischen den Einzelblechen beeinflusst werden.

Um die Kapillarwirkung noch zu steigern bzw. zu beschleunigen, kann das Blechpaket des Rotors während des Träufelvorgangs unter Schwingungen versetzt werden.

Auch eine Temperierung des Blechpakets und/oder des Klebers hat positive Auswirkung auf das Eindringen des Klebstoffs in die Spalte, aufgrund geringerer Viskosität.

Das Harz bzw. Harz/Härter-System sollte idealerweise dabei eine relativ geringe Viskosität aufweisen, vorzugsweise unter 100 mPa, um die Kapillarwirkung zwischen Blechen und zwischen der Tascheninnenwandung und der dazu korrespondierenden Seite des Permanentmagneten zu steigern.

Das Eindringen in die Tasche erfolgt sehr schnell, insbesondere an den schmalen Stegen der radial äußeren Flusssperren, so dass eine Beaufschlagung mit Kleber vor allem an die radial nach außen weisenden Magnetflächen relativ schnell erfolgt.

Bei entsprechend längerem Träufeln wird durch fortgesetzte Kapillierung zusätzlich eine Verklebung des Permanentmagneten auch zur radial innenliegenden Taschenwandung hin erfolgen. Die Notwendigkeit der beidseitigen Verklebung des Permanentmagneten ist abhängig vom Einsatz des Motors und ist besonders dann vorzusehen, wenn mit einem Eintrag von externen Schwingungen zu rechnen ist, wie beispielsweise im Bahn- oder Schiffsverkehr.

Der Vorteil dieser Lösung liegt darin, dass der komplett mit Permanentmagneten versehene Rotor zumindest in seinen Polen abschnittsweise verklebt wird. Es besteht somit keine Gefahr, dass die Klebefläche bzw. der Klebespalt zwischen Permanentmagnet und Tascheninnenwandung zu gering benetzt sind.

Während des Träufelns steht ausreichend Harz zur Verfügung, bis das System gesättigt ist. Mit anderen Worten: das System ist gesättigt, wenn die Kapillarwirkung in den Spalten zwischen den Blechen abbricht, da diese Spalte aufgefüllt sind.

Da die Rotorbleche bzw. Teilblechpakete bereits vor dem Klebevorgang auf die Welle aufgepresst sind, besteht zudem keine Gefahr einer Rissbildung in der Rotormontage.

Das Verkleben mit einem Harzsystem ist zudem wesentlich günstiger. Die Temperatureignung des Rotors und damit des Motors im Einsatz ist hoch. Die Temperatureignung liegt ca. im Bereich von 160°C und somit über der Temperaturfestigkeit üblicher Hochleistungsmagneten.

Beim Einsatz eines 1-komponentiges-Harz-Systems ist ein Aushärten unter erhöhter Temperatur vorzusehen, während bei einem 2-komponentiges-Harz-System mit entsprechender Einstellung keine zusätzliche thermische Behandlung erforderlich ist.

Die Bleche werden im Außenbereich zusätzlich miteinander verklebt, womit Schwingungen der Einzelbleche des Blechpakets im Betrieb der dynamoelektrischen Maschine reduziert werden.

Über eine axial bewegte Düse wird der Außendurchmesser des sich drehenden Rotors mit Harz bzw. Härter bzw. Kleber beaufschlagt. Der Kleber verläuft auf der Oberfläche, kapilliert in das Blechpaket ein und dringt zumindest bis zur Oberfläche des Permanentmagneten vor.

Mit den Einstellparametern des Träufelvorgangs (Volumenstrom, Temperatur Rotorpaket oder Kleber, Drehzahl Rotor, Axialer Düsenverlauf, Zeit der Beaufschlagung, Viskosität des Klebers) kann gezielt Einfluss auf die Verklebung und/oder die Eindringtiefe genommen werden.

Um auch die Rotoren für Anwendungen im Hochdrehzahlbereich einer dynamoelektrischen Maschine zu ertüchtigen, kann während des Träufelvorganges zusätzlich eine verstärkende Faser oder eine Bandage am Außendurchmesser des Rotors gewickelt werden.

Vorzugsweise ist dies eine bis ca. fünf Lagen mit Glas- oder Kohlefaser, die unter einem schrägen Winkel bis maximal zu einem Aufmaß von ca. 0,5 x radialer Luftspalt auf den Außenumfang des Blechpakets gewickelt wird. Der radiale Luftspalt ist dabei der Abstand zwischen Rotor und Stator.

Für eine beschleunigtes Träufelverfahren, bzw. größere Blechpakete können zusätzlich an den Stirnseiten des Blechpakets, Füllscheiben angebracht werden, die eine axiale Beaufschlagung der Ausnehmungen mit Kleber, insbesondere durch "leere äußere" Flusssperre beschleunigen. Damit wird eine Kapillarverlauf des Klebers direkt an den Magnetflächen der Permanentmagneten bewirkt.

Diese Füllscheiben können mittels angebrachter Pfropfen an vorhandene Bohrungen an der Stirnseite des Blechpakets des Rotors eingepresst werden. Damit ergibt sich ein Halt für den Fertigungsprozess des Träufelns. Schließlich werden diese Füllscheiben zusätzlich durch die Verklebung gehalten. Bei Bedarf sind diese Füllscheiben nach der Innenseite hin mit einer Schicht ausgeführt, die eine Abdichtung begünstigen.

Die Füllscheibe kann -soweit sie am Rotor verbleiben - zusätzlich mit Lüfterflügeln ausgestattet werden, um im Betrieb der dynamoelektrischen Maschine eine Zirkulation der Luft im Motorinnenraum zu bewirken, womit die Effizienz der dynamoelektrischen Maschine gesteigert werden kann.

Die Methode mit Füllscheiben eine axiale Verklebung der Permanentmagnete mit der Tascheninnenwandung zu erreichen, wäre auch für vollflächig verklebte Blechpakete, wie ein Backlack-Klebesystem geeignet, da dort ein radiales Eindringen des Klebers mittels Kapillierung zwischen den Einzelblechen in die Taschen nicht möglich ist.

In einer weiteren Ausführung wird das Rotorpaket nur an einer Stirnseite mit einer Füllscheibe ausgestattet, während auf der gegenüberliegenden Seite nur eine flache Abdichtung vorgesehen ist. Zur beschleunigten Verklebung kann der Rotor beim Rotieren in eine Schräglage oder Taumelbewegung versetzt werden.

Das erfindungsgemäße Verfahren weist nunmehr folgende Vorteile auf:
Es führt zu einer gleichmäßigen Fixierung der Permanentmagnete, es eine Verklebung am gesamten Rotor möglich, somit sind keine nachgeschalteten Schrumpfprozesse, wie bei herkömmlichen Verfahren notwendig. Es besteht des Weiteren keine Gefahr der Rissbildung an der Verklebung. Es handelt sich um eine einfache und kostengünstige Lösung. Die Klebung ist geeignet für höhere Temperaturen bis 160°C und weist eine schnelle Aushärtung auf.

Die Erfindung sowie weitere vorteilhafte Ausgestaltungen der Erfindung werden anhand prinzipiell dargestellter Ausführungsbeispiele näher erläutert, darin zeigen:
- FIG 1: einen Längsschnitt einer prinzipiellen dynamoelektrischen Maschine,
- FIG 2: einen Querschnitt einen mit Permanentmagneten bestückten Rotors,
- FIG 3: einen Längsschnitt eines mit Permanentmagneten bestückten Rotors,
- FIG 4: einen Querschnitt einen mit Permanentmagneten bestückten Rotors während des Träufelprozesses,
- FIG 5: eine Detailansicht von FIG 4,
- FIG 6: einen Querschnitt einen mit Permanentmagneten bestückten Rotors während des Träufelprozesses mit einer Bandage,
- FIG 7: einen Querschnitt einen mit Permanentmagneten bestückten Rotors während des Träufelprozesses, der die Eindringtielfe zeigt,
- FIG 8: einen Längsschnitt einen mit Permanentmagneten bestückten Rotors während des Träufelprozesses mit Füllscheiben,
- FIG 9: einen Längsschnitt einen mit Permanentmagneten bestückten Rotors während des Träufelprozesses mit einseitiger Füllscheibe.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 5 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 5 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die beschriebenen Ausführungen können beliebig kombiniert werden. Ebenso sind auch Einzelmerkmale der jeweiligen Ausführungen kombinierbar, ohne das Wesen der Erfindung zu verlassen.

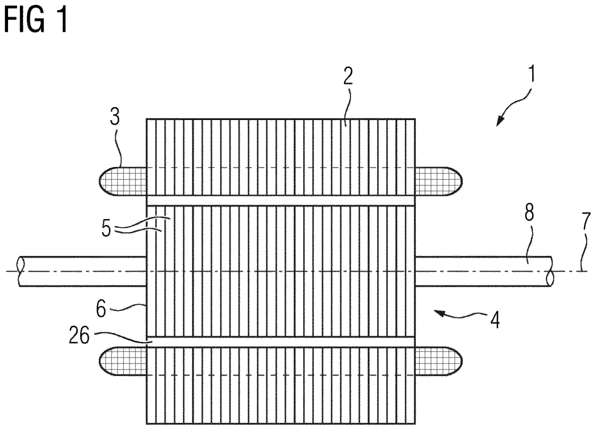

FIG 1 zeigt in einer prinzipiellen Längsdarstellung eine dynamoelektrische Maschine 1, in diesem Fall eine permanenterregte Synchronmaschine. Diese permanenterregte Synchronmaschine weist einen Stator 2 auf, der in nicht näher dargestellten Nuten ein Wicklungssystem 3 aufweist, das an den Stirnseiten des Stators 2 einen Wickelkopf ausbildet. Durch elektromagnetische Wechselwirkung über einen Luftspalt 26 wird durch ein bestromtes Wicklungssystem 3 ein Rotor 4 in Rotation um eine Achse 7 versetzt. Der Rotor 4, der koaxial zum Stator 2 angeordnet ist, weist in axial verlaufenden Ausnehmungen 18 angeordnete Permanentmagnete 15 auf, die auch als vergrabene Permanentmagnete 15 bezeichnet werden. Die Bleche 5 des Rotors 4 sind als Blechpaket 6 paketiert und mit einer Welle 8 drehfest verbunden.

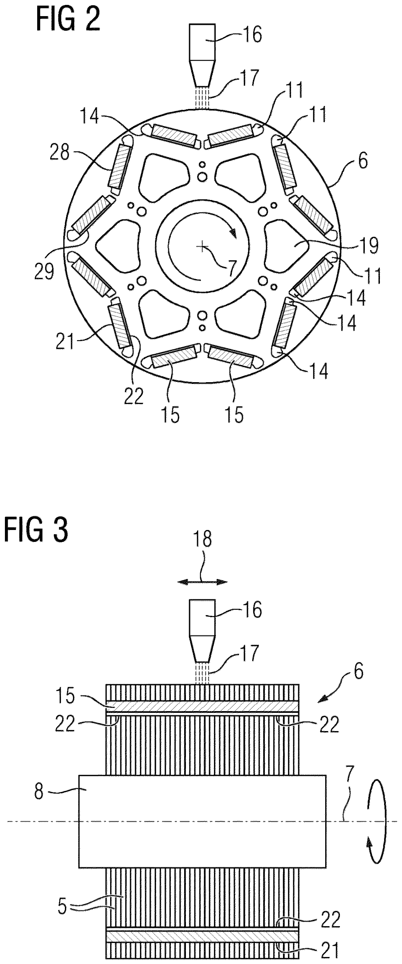

FIG 2 zeigt einen Querschnitt des mit Permanentmagneten 15 bestückten Rotors 4, zu Beginn des Träufelprozesses, bei dem eine Träufeldüse 16, das Harz 17 auf die Oberfläche des Blechpakets 6 des Rotors 4 gibt. Die Ausnehmungen 11 eines Pols sind dabei V-förmig angeordnet, wobei radial weiter innen - Richtung Achse 7 - Trägheitsausnehmungen 19 vorgesehen sind.

FIG 3 zeigt einen Längsschnitt des mit Permanentmagneten 15 bestückten Rotors 4, bei dem prinzipiell die axiale Verfahrung der Träufeldüse 16 und die Rotation des Rotors 4 während des "Bestückens" mit Harz bzw. Kleber gezeigt ist.

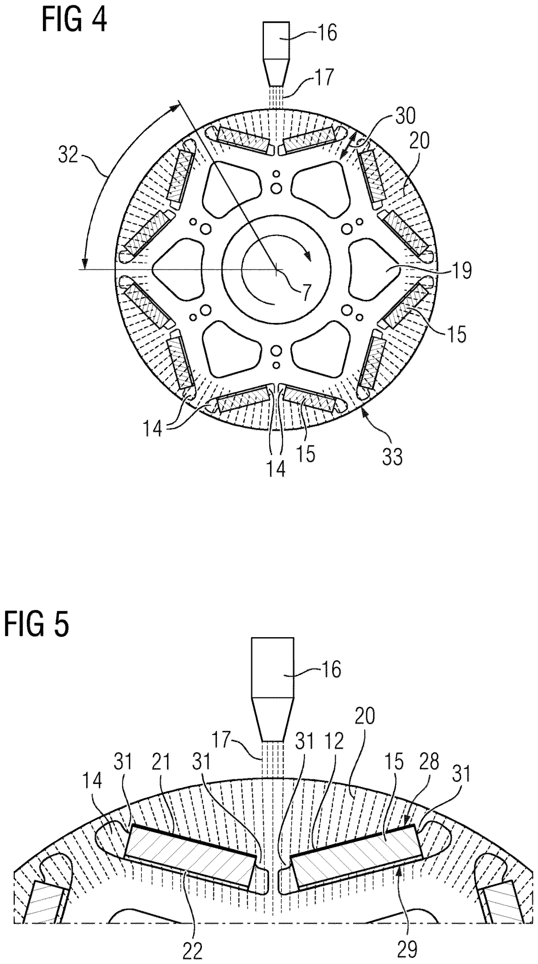

FIG 4 zeigt im Querschnitt den mit Permanentmagneten 15 bestückten Rotor 4 während des Träufelprozesses. Die Kapillierung ist durch gestrichelte Linien angedeutet. Je nach Viskosität des Klebers 17, und der Einwirkzeit stellt sich eine größere Eindringtiefe 30 ein.

FIG 5 zeigt eine Detailansicht der FIG 4, bei gezeigt ist, dass die Kapillierung den Kleber 17 in die radialen Außenbereiche des Blechpakets 6 und in die Ausnehmungen 11, insbesondere die Flusssperren 14 und die Spalte 21,22 zwischen den Permanentmagnet 15 und der Tascheninnenwandung 28,29 eindringen lässt. Aufgrund der Hohlräume im Bereich eines magnetischen Pols 32 ist dort die Eindringtiefe etwas größer als im Bereich der Pollücken 33.

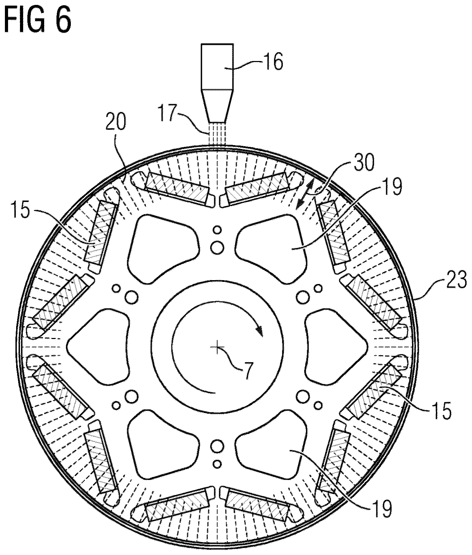

FIG 6 zeigt im Querschnitt den mit Permanentmagneten 15 bestückten Rotor 4, der insbesondere während des Träufelprozesses mit einer Bandage 23 in einer vorgebbaren Anzahl von Lagen versehen wird.

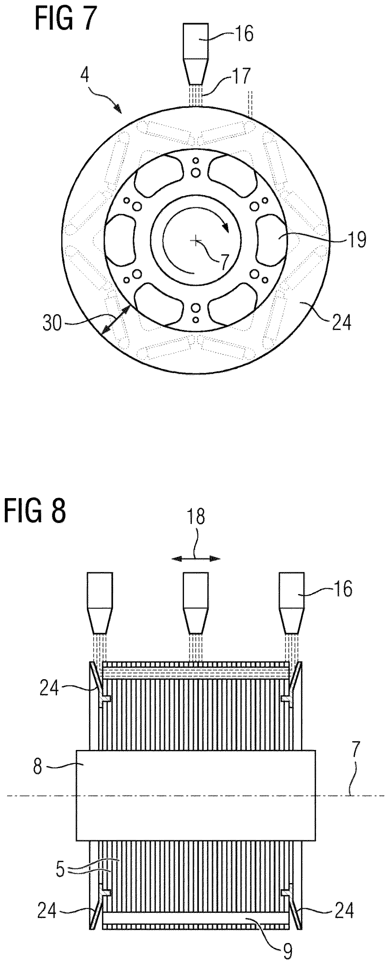

FIG 7 zeigt in einem Querschnitt des mit Permanentmagneten 15 bestückten Rotors 4 die maximale Eindringtiefe 30 in das Blechpaket 6 während des Träufelprozesses. In dieser Phase geliert dann der Kleber 17 aus.

FIG 8 zeigt in einem Längsschnitt einen mit Permanentmagneten 15 bestückten Rotor 4, derwährend des Träufelprozesses mit mehreren Träufeldüse 16 und Füllscheiben 24 den Träufelprozesses beschleunigen kann.

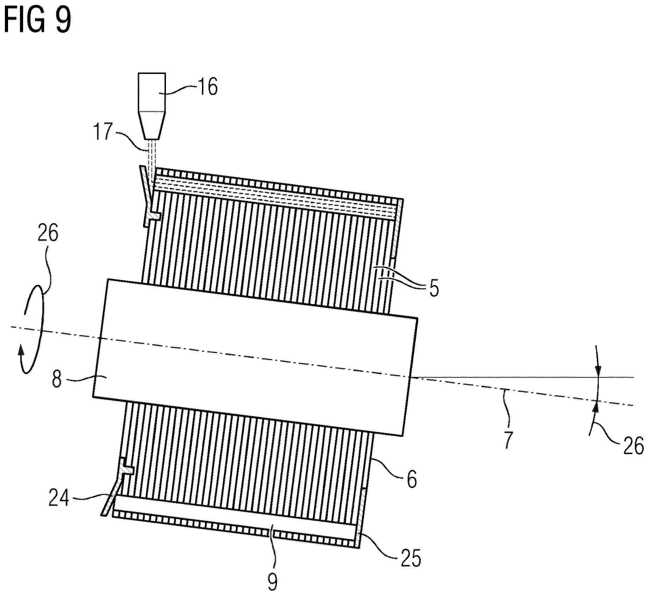

FIG 9 zeigt einen Längsschnitt des mit Permanentmagneten 15 bestückten Rotors 4, der während des Träufelprozesses mit einseitiger Füllscheibe 24 Taumelbewegungen ausführt.

Eine derartige permanenterregte Synchronmaschine mit einem erfindungsgemäßen Rotor 4 wird vorzugsweise bei Kompressoren, Lüfter, Pumpen eingesetzt. Ebenso kann eine derartige permanenterregte Synchronmaschine in der Verkehrstechnik als Hauptantriebe und/oder Hilfsantrieb im Bahn- oder Schiffverkehr eingesetzt werden.

### Bezugszeichenliste

- 1: dynamoelektrische Maschine
- 2: Stator
- 3: Wickelkopf
- 4: Rotor
- 5: Bleche Rotor
- 6: Blechpaket
- 7: Achse
- 8: Welle
- 11: Ausnehmungen
- 12: Tasche
- 14: Flusssperre
- 15: Permanentmagnet
- 16: Träufeldüse
- 17: Kleber
- 18: Bewegung Düse
- 19: Trägheitsaussparung
- 20: Kapillierung
- 21: äußerer Spalt
- 22: innerer Spalt
- 23: Bandage
- 24: Füllscheibe
- 25: Abdichtscheibe
- 26: Bewegung Welle
- 27: Luftspalt
- 28: radial äußere Tascheninnenwandung
- 29: radial innere Tascheninnenwandung
- 30: Eindringtiefe
- 31: Halteelemente
- 32: magnetischer Pol
- 33: Pollücke

## Patentansprüche

1. Verfahren zur Fixierung von Permanentmagneten (9) in Rotoren (4) permanenterregter Synchronmaschinen mittels eines Träufelprozesses durch folgende Schritte:
- Paketieren (30), insbesondere Stanzpaketieren eines Blechpaketes (6) des Rotors (4),
- Drehfestes Verbinden des Blechpaketes (6) mit einer Welle (8),
- Axiales Einsetzen von Permanentmagneten (15) in im Wesentlichen axial verlaufenden Ausnehmungen (11) des Blechpakets (6),
- das mit Permanentmagneten (15) bestückte Blechpaket (6) wird unter Rotation um seine Achse (7) zumindest am Außendurchmesser mittels zumindest einer axial bewegbaren Düse mit Harz bzw. Härter beaufschlagt, so dass sich das Harz bzw. Kleber (47) gleichmäßig zumindest über die Außenoberfläche in Klebespalte (18,20) zwischen Permanentmagnet (15) und Innenseite der Tasche (12) verteilt, als auch zwischen die Bleche (5) im radial äußeren Bereich des Blechpakets (6).

2. Verfahren zur Fixierung von Permanentmagneten (15) in Rotoren (4) permanenterregter Synchronmaschinen mittels eines Träufelprozesses durch folgende Schritte:
- Paketieren (30), insbesondere Stanzpaketieren von Teilblechpaketen (6) des Rotors (4),
- Drehfestes Verbinden des Teilblechpaketes mit einer Hilfswelle,
- Axiales Einsetzen von Permanentmagneten (15) in im Wesentlichen axial verlaufenden Ausnehmungen (11) des Teilblechpakets,
- Drehfestes Verbinden der einzelnen Teilblechpakete auf einer Welle (8), mittels axialem Paketieren zu einem Blechpaket (6),
- das mit Permanentmagneten (15) bestückte Blechpaket (6) wird unter Rotation um seine Achse (7) zumindest am Außendurchmesser mittels zumindest einer axial bewegbaren Träufeldüse (16) mit Harz bzw. Härter beaufschlagt, so dass sich das Harz bzw. Kleber (47) gleichmäßig zumindest über die Außenoberfläche in Klebespalte (18,20) zwischen Permanentmagnet (15) und Innenseite der Tasche (12) verteilt, als auch zwischen die Bleche (5) im radial äußeren Bereich des Teilblechpakets.

3. Verfahren zur Fixierung von Permanentmagneten (15) in Rotoren (4) permanenterregter Synchronmaschinen nach Anspruch 1 oder 2, **dadurch gekennzeichnet, dass** im Anschluss an den Träufelprozess das Blechpaket (6) des Rotors (4) zur Beschleunigung des Aushärtens einem thermischen Prozess unterzogen wird, dessen Temperatur unter der Grenztemperatur der Permanentmagnete (15) liegt.

4. Verfahren zur Fixierung von Permanentmagneten (15) in Rotoren (4) permanenterregter Synchronmaschinen nach einem der vorhergehenden Ansprüche, **dadurch gekennzeichnet, dass** währen des Träufelprozessses eine verstärkte Faser oder Bandage (23) am Außenumfang des Blechpakets (6) gewickelt wird.

5. Verfahren zur Fixierung von Permanentmagneten (15) in Rotoren (4) permanenterregter Synchronmaschinen nach Anspruch 4, **dadurch gekennzeichnet, dass** die Faser bzw. Bandage (23) mehrere Auflagen am Außenumfang des Rotors (4) einnimmt, vorzugsweise eine bis 5 Auflagen, aber nicht mehr als das 0,5fache der radialen Dicke des Luftspalts (26) zwischen Stator (2) und Rotor (4).

6. Verfahren zur Fixierung von Permanentmagneten (15) in Rotoren (4) permanenterregter Synchronmaschinen nach einem der vorhergehenden Ansprüche, **dadurch gekennzeichnet, dass** die Viskosität des Harzes (17) vergleichsweise gering ist und vorzugsweise im Bereich bis zu 100 mPaS liegt.

7. Verfahren zur Fixierung von Permanentmagneten (15) in Rotoren (4) permanenterregter Synchronmaschinen nach einem der vorhergehenden Ansprüche, **dadurch gekennzeichnet, dass** die Paketierung der Bleche (5) des Blechpakets (6) und/oder der Teilblechpakete mittels Schweißung oder Verklebung oder Stanzpaketierung der jeweiligen Bleche (5) bzw. Teilbleche erfolgt.

8. Verfahren zur Fixierung von Permanentmagneten (15) in Rotoren (4) permanenterregter Synchronmaschinen nach einem der vorhergehenden Ansprüche, **dadurch gekennzeichnet, dass** das Aushärten des Klebers bzw. Harzes (17) im Blechpaket (6) oder Teilblechpaket im Anschluss an den Träufelprozess in einem Ofen oder bereits während der Gelierphase mittel Wärmestrahlung oder Induktionserwärmung erfolgt.

9. Verfahren zur Fixierung von Permanentmagneten (15) in Rotoren (4) permanenterregter Synchronmaschinen nach einem der vorhergehenden Ansprüche, **dadurch gekennzeichnet, dass** das Blechpaket (6) oder das Teilblechpaket während des Träufelprozesses in axiale und/oder umfängliche Schwingungen versetzt wird, um die Kapillarwirkung, insbesondere zwischen den Einzelblechen (5) zu steigern bzw. zu beschleunigen.

10. Verfahren zur Fixierung von Permanentmagneten (15) in Rotoren (4) permanenterregter Synchronmaschinen nach einem der vorhergehenden Ansprüche, **dadurch gekennzeichnet, dass** eine Temperierung der Blechpakete (6) und/oder Teilblechpakete und/oder des Klebers (17) zur Optimierung des Klebeprozesses angewandt wird, insbesondere 40-80°C am Blechpaket (6), vorzugsweise 60°C.

11. Verfahren zur Fixierung von Permanentmagneten (15) in Rotoren (4) permanenterregter Synchronmaschinen nach einem der vorhergehenden Ansprüche, **dadurch gekennzeichnet, dass** zumindest an einer Stirnseite des Blechpakets (6) Füllscheiben (24) vorgesehen werden, die die eine axiale Beschickung mit Harz bzw. Kleber (17) über die Flusssperren (14) der Ausnehmungen (11) gestattet.

12. Rotor (4) einer permanenterregten Synchronmaschine mit vergrabenen Permanentmagneten (15) hergestellt nach einem Verfahren der Ansprüche 1 bis 11, **dadurch gekennzeichnet, dass** die Taschen (12) der Ausnehmungen (11), von dem Volumen der Permanentmagnete (15) abgesehen, mit Kleber (17) gefüllt sind und ein radial vorbestimmter außenliegender Bereich der Einzelbleche (5) verklebt ist.

13. Permanenterregte Synchronmaschine mit einem Rotor (4) nach Anspruch 12.

14. Kompressoren, Lüfter, Pumpen mit einem Antrieb, der zumindest eine permanenterregte Synchronmaschine nach Anspruch 13 aufweist.

15. Hauptantrieb und/oder Hilfsantrieb im Bahn- oder Schiffverkehr, der zumindest eine permanenterregte Synchronmaschine nach Anspruch 13 aufweist.
